(19) Europäisches Patentamt
European Patent Office
Office européen des brevets

(11) EP 2 863 568 A1

(12) EUROPEAN PATENT APPLICATION

(43) Date of publication:
22.04.2015 Bulletin 2015/17

(51) Int Cl.:
H04L 1/00 (2006.01)     H04B 7/06 (2006.01)

(21) Application number: 14196270.4

(22) Date of filing: 09.03.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 09.03.2010  US 312119 P
08.03.2011  US 201113043298

(62) Document number(s) of the earlier application(s) in
accordance with Art. 76 EPC:
11710078.4 / 2 545 668

(71) Applicant: Qualcomm Incorporated
San Diego, CA 92121-1714 (US)

(72) Inventors:
• Merlin, Simone
San Diego, CA, CA California 92121-1714 (US)
• Abraham, Santosh Paul
San Diego, CA, CA California 92121-1714 (US)

(74) Representative: Wegner, Hans
Bardehle Pagenberg Partnerschaft mbB
Patentanwälte, Rechtsanwälte
Prinzregentenplatz 7
81675 München (DE)

Remarks:
This application was filed on 04-12-2014 as a
divisional application to the application mentioned
under INID code 62.

(54) **Rate adaptation for SDMA**

(57)     A transmission parameter (430) for a link in a wireless network (100) is adapted for a current simultaneous transmission based on a loss parameter. The lass parameter is useable to determine an allocation for a wireless node (120d) of a plurality of wireless nodes (120d, 120e) participating in the simultaneous transmission. In some examples, the selected transmission parameter (430) and loss parameters for a previous transmission, along with the loss parameter for the current simultaneous transmission are used to determine the transmission parameter (410). In some embodiments, an access point (AP) (110) determines and communicates a lass parameter to a plurality of access terminals (AT) (120d, 120e). Each AT determines a modulation and coding scheme (MCS) based at least in part on the loss parameter. Each AT simultaneously transmits at least one data stream (160, 170) to the AP in accordance with the determined MCS. In some other embodiments, the transmission rate for simultaneous downlink communications (140, 150) is similarly adapted.

FIG. 5

## Description

## CROSS-REFERENCE TO RELATED APPLICATIONS

## Claim of Priority under 35 U.S.C. §119

The present Application for Patent claims priority to Provisional Application No. 61/312,119, entitled "Rate Adaptation for SDMA" filed March 9, 2010, and assigned to the assignee hereof, and is hereby expressly incorporated by reference herein in its entirety.

## BACKGROUND

## I. Field

The following description relates generally to communication systems, and more particularly to multiple-user uplink communication in a wireless network.

## II. Background

To address increasing bandwidth requirements of wireless communications systems, different schemes are being developed to allow multiple access terminals to communicate with a single access point by sharing the channel resources while achieving high data throughputs. Multiple Input or Multiple Output (MIMO) technology represents one such approach that has recently emerged as a popular technique for the next generation communication systems. MIMO technology has been adopted in several emerging wireless communications standards such as the Institute of Electrical and Electronics Engineers (IEEE) 802.11 standard. IEEE 802.11 denotes a set of Wireless Local Area Network (WLAN) air interface standards developed by the IEEE 802.11 committee for short-range communications (e.g., tens of meters to a few hundred meters).

In wireless communications systems, medium access (MAC) protocols are designed to operate to exploit several dimensions of freedom offered by the air link medium. The most commonly exploited dimensions of freedom are time and frequency. For example, in the IEEE 802.11 MAC protocol, the "time" dimension of freedom is exploited through the CSMA (Carrier Sense Multiple Access) protocol. The CSMA protocol attempts to ensure that no more than one transmission occurs during a period of potential high interference. Similarly, the "frequency" dimension of freedom can be exploited by using different frequency channels.

Recent developments have introduced space as a dimension to be exploited to increase, or at least more efficiently use, existing capacity. Spatial Division Multiple Access (SDMA) can improve utilization of the air link by scheduling multiple access terminals for simultaneous transmission and reception. Data is sent to each of the terminals using spatial streams. For example, with SDMA, a transmitter forms orthogonal streams to individual receivers. Such orthogonal streams can be formed because the transmitter has several antennas and the transmit/receive channel consists of several paths. Receivers may also have one or more antennas (MIMO, SIMO). For this example, it is assumed that the transmitter is an access point (AP) and the receivers are access terminals (ATs). The streams are formed such that a stream targeted at AT-B, for example, is seen as low power interference at other access terminals (e.g. AT-C, AT-D, ..., etc.). Such a targeted stream should not cause significant interference at other ATs and such interference is likely ignored. However, depending on transmit conditions on each link, an appropriate modulation and coding scheme (MCS) should be selected. Typically, the AP controls the modulation and coding scheme (MCS) for a particular communications link, including its adaptation over many transmit opportunities (TXOPs). However, this places an additional burden on the AP. In addition, typical rate adaptation schemes only consider packet transmission failure/success on the particular link to determine the appropriate change in data transmission rate for that link. Improvements to current rate adaptation schemes and mechanisms to share information useful for rate adaptation are desireable.

## SUMMARY

According to various aspects, a transmission parameter for a link in a wireless network is adapted for a current simultaneous transmission based on a loss parameter. The loss parameter is useable to determine an allocation for a wireless node of a plurality of wireless nodes participating in the simultaneous transmission.

In some embodiments, an access point (AP) determines and communicates a loss parameter to a plurality of access terminals (AT). Each AT determines a modulation and coding scheme (MCS) based at least in part on the loss parameter. Each AT simultaneously transmits at least one data stream to the AP in accordance with the determined MCS. In some other embodiments, the transmission rate for simultaneous downlink communications is similarly adapted.

In one aspect, the selected transmission parameter and loss parameters corresponding to a previous transmission, along with the loss parameters for the current simultaneous transmission are used to determine the transmission parameters.

In some embodiments, a message for a current simultaneous transmission is received. The message includes at least one current loss parameter, the at least one current loss parameter is useable to determine an allocation for a wireless node participating in the current simultaneous transmission of multiple data streams from a plurality of wireless nodes. A current transmission parameter is determined for the current simultaneous transmission. This determination is based at least in part on the at least one current loss parameter. At least one data stream for the current simultaneous transmission is transmitted according to the current transmission parameter. In some examples, the transmission parameter is any of a transmission rate (e.g., modulation and coding scheme) and a transmission power level (e.g., maximum transmission power, transmission power back-off, etc.).

In another aspect, at least one previous loss parameter for a previous transmission and a previous transmission rate for the previous transmission are retrieved. The current transmission parameter is determined based on the previous transmission parameter, the at least one previous loss parameter, and the at least one current loss parameter.

In another aspect, the current transmission parameter is stored as the previous transmission parameter and the at least one current loss parameter is stored as the previous loss parameter.

In some embodiments, the current transmission parameter is determined by reading a look-up table.

In another aspect, at least one previous loss parameter for a previous transmission and a previous signal to noise ratio (SNR) for the previous transmission are retrieved. A current SNR is determined based on the previous SNR, the at least one previous loss parameter, and the at least one current loss parameter. The current transmission parameter is determined based on the current SNR.

In some embodiments, the message communicating loss parameters is any of a clear to transmit message (CTX) and a transmit start message (TXS).

In another aspect, a loss parameter is any of a total number of spatial streams (SS) allocated to a wireless node, a total number of spatial streams (SS) allocated to a plurality of wireless nodes, a transmit power back-off allocated to each wireless node of the plurality of wireless nodes, a transmit power value allocated to each wireless node of the plurality of wireless nodes, a transmit power back-off allocated to the wireless node, a transmit power value allocated to the wireless node, a total number of wireless nodes allocated for the current simultaneous transmission, and a signal to noise ratio (SNR) offset value allocated to the wireless node. In some embodiments, the wireless node and the plurality of wireless nodes are access terminals.

In another aspect, packet loss is determined for a previous transmission and the current transmission parameter is selected for the current simultaneous transmission based at least in part on the packet loss for the previous transmission.

In some embodiments, an indication of packet loss is received for at least one previous transmission to the access terminal. At least one current loss parameter is determined for a current simultaneous transmission of multiple data streams from a plurality of access terminals that includes the access terminal. The at least one current loss parameter is useable to determine an allocation for the access terminal. A current transmission parameter for the current simultaneous transmission is determined based on the at least one current loss parameter and the indication of packet loss. At least one data stream for the current simultaneous transmission is transmitted to the access terminal in accordance with the current transmission parameter.

In some embodiments a message including at least one current loss parameter is received, a current transmission parameter is selected, and at least one data stream for the current simultaneous transmission is transmitted according to the current transmission parameter.

In some other embodiments, a current loss parameter is determined, a current transmission parameter is selected, and at least one data stream for the current simultaneous transmission is transmitted according to the current transmission parameter.

To the accomplishment of the foregoing and related ends, the one or more aspects comprise the features hereinafter fully described and particularly pointed out in the claims. The following description and the annexed drawings set forth in detail certain illustrative aspects of the one or more aspects. These aspects are indicative of but a few of the various ways in which the principles of various aspects may be employed and the described aspects are intended to include all such aspects and their equivalents

## BRIEF DESCRIPTION OF THE DRAWINGS

FIG. 1 is a diagram of a wireless communications network configured in accordance with an aspect of the disclosure.

FIG. 2 is a block diagram illustrative of an access point and two user terminals in accordance with certain embodiments of the present disclosure.

FIG. 3 is a diagram illustrative of a rate adaptation scheme expressed as a state machine.

FIG. 4 is a diagram illustrative of an enhanced rate adaptation scheme expressed as a state machine.

FIG. 5 is a flow diagram illustrating a method 500 of adapting a transmission rate in a wireless communications system in accordance with one aspect of the present disclosure.

FIG. 6 is a flow diagram illustrating a method 600 of adapting a transmission rate in a wireless communications system in accordance with another aspect of the present disclosure.

FIG. 7 is a flow diagram illustrating a method 700 of determining and communicating loss parameters in one embodiment.

FIG. 8 is a flow diagram illustrating a method 800 of adapting a transmission parameter in a wireless communications system in one embodiment.

FIG. 9 is a flow diagram illustrating a method of adapting a transmission parameter in a wireless communications system in another embodiment.

FIG. 10 is a block diagram illustrating a method of adapting a transmission parameter in a wireless communications system in yet another embodiment.

FIG. 11 is a flow diagram illustrating the functionality of a transmission parameter adaptation scheme based on packet loss or packet transmission success.

FIG. 12 is a block diagram illustrating the functionality of an AP apparatus for adapting a transmission parameter in a wireless communications system in accordance with one aspect of the disclosure.

FIG. 13 is a block diagram illustrating the functionality of an AT apparatus for adapting a transmission parameter in a wireless communications system in accordance with one aspect of the disclosure.

FIG. 14 is a block diagram of an apparatus that includes a processing system.

## DETAILED DESCRIPTION

Various aspects of the novel systems, apparatus and methods are described more fully hereinafter with reference to the accompanying drawings. The teachings of this disclosure may, however, be embodied in many different forms and should not be construed as limited to any specific structure or function presented throughout this disclosure. Based on the teachings herein one skilled in the art should appreciate that that the scope of disclosure is intended to cover any aspect of the systems, apparatus and methods disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect disclosed herein may be embodied by one or more elements of a claim.

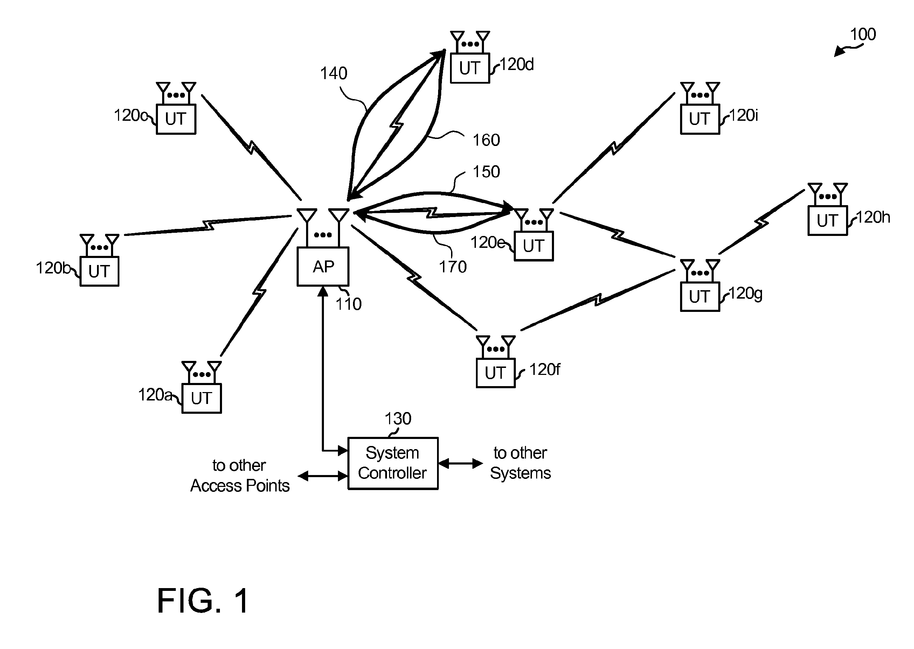

FIG. 1 shows a multiple-access MIMO system 100 with access points and user terminals. For simplicity, only one access point 110 is shown in FIG. 1. An access point is generally a fixed station that communicates with the user terminals and may also be referred to as a base station, wireless node, or some other terminology. A user terminal may be fixed or mobile and may also be referred to as a mobile station (STA), an access terminal (AT) a wireless device, a wireless node, or some other terminology. Access point 110 may communicate with one or more user terminals 120 at any given moment on the downlink and uplink. The downlink (i.e., forward link) is the communication link from the access point to the user terminals, and the uplink (i.e., reverse link) is the communication link from the user terminals to the access point. A user terminal may also communicate peer-to-peer with another user terminal. A system controller 130 couples to and provides coordination and control for the access points.

While portions of the following disclosure will describe user terminals 120 capable of communicating via SDMA, for certain embodiments, the user terminals 120 may also include some user terminals that do not support SDMA. Thus, for such embodiments, an AP 110 may be configured to communicate with both SDMA and non-SDMA user terminals. This approach may conveniently allow older versions of user terminals ("legacy" stations) to remain deployed in an enterprise, extending their useful lifetime, while allowing newer SDMA user terminals to be introduced as deemed appropriate.

System 100 employs multiple transmit and multiple receive antennas for data transmission on the downlink and uplink. Access point 110 is equipped with $N_{ap}$ antennas and represents the multiple-input (MI) for downlink transmissions and the multiple-output (MO) for uplink transmissions. A set of $N_u$ selected user terminals 120 collectively represents the multiple-output for downlink transmissions and the multiple-input for uplink transmissions. For pure SDMA, it is desired to have $N_{ap} \geq N_u \geq 1$ if the data symbol streams for the $N_u$ user terminals are not multiplexed in code, frequency or time by some means. $N_u$ may be greater than $N_{ap}$ if the data symbol streams can be multiplexed using different code channels with CDMA, disjoint sets of subbands with OFDM, and so on. Each selected user terminal transmits user-specific data to and/or receives user-specific data from the access point. In general, each selected user terminal may be equipped with one or multiple antennas (i.e., $N_{ut} \geq 1$). The $N_u$ selected user terminals can have the same or different number of antennas.

SDMA system 100 may be a time division duplex (TDD) system or a frequency division duplex (FDD) system. For a TDD system, the downlink and uplink share the same frequency band. For an FDD system, the downlink and uplink use different frequency bands. MIMO system 100 may also utilize a single carrier or multiple carriers for transmission. Each user terminal may be equipped with a single antenna (e.g., in order to keep costs down) or multiple antennas (e.g., where the additional cost can be supported).

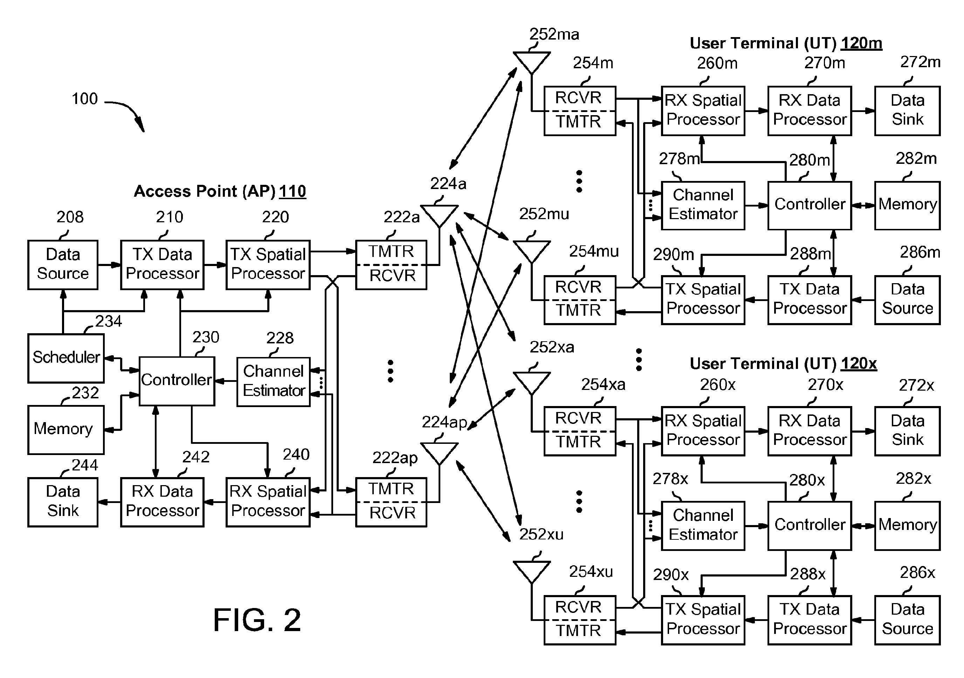

FIG. 2 shows a block diagram of access point 110 and two user terminals 120m and 120x in MIMO system 100. Access point 110 is equipped with $N_{ap}$ antennas 224a through 224ap. User terminal 120m is equipped with $N_{ut,m}$ antennas 252ma through 252mu, and user terminal 120x is equipped with $N_{ut,x}$ antennas 252xa through 252xu. Access point 110 is a transmitting entity for the downlink and a receiving entity for the uplink. Each user terminal 120 is a transmitting entity for the uplink and a receiving entity for the downlink. As used herein, a "transmitting entity" is an independently operated apparatus or device capable of transmitting data via a wireless channel, and a "receiving entity" is an independently operated apparatus or device capable of receiving data via a wireless channel. In the following description, the subscript *"dn"* denotes the downlink, the subscript *"up"* denotes the uplink, $N_{up}$ user terminals are selected for simultaneous transmission on the uplink, $N_{dn}$ user terminals are selected for simultaneous transmission on the downlink, $N_{up}$ may or may not be equal to $N_{dn}$, and $N_{up}$ and $N_{dn}$ may be static values or can change for each scheduling interval. The beam-steering or some other spatial processing technique may be used at the access point and user terminal.

On the uplink, at each user terminal 120 selected for uplink transmission, a TX data processor 288 receives traffic data from a data source 286 and control data from a controller 280. TX data processor 288 processes (e.g., encodes, interleaves, and modulates) the traffic data $\{d_{up,m}\}$ for the user terminal based on the coding and modulation schemes associated with the rate selected for the user terminal and provides a data symbol stream $\{s_{up,m}\}$. A TX spatial processor 290 performs spatial processing on the data symbol stream $\{s_{up,m}\}$ and provides $N_{ut,m}$ transmit symbol streams for the $N_{ut,m}$ antennas. Each transmitter unit (TMTR) 254 receives and processes (e.g., converts to analog, amplifies, filters, and frequency upconverts) a respective transmit symbol stream to generate an uplink signal. $N_{ut,m}$ transmitter units 254 provide $N_{ut,m}$ uplink signals for transmission from $N_{ut,m}$ antennas 252 to the access point.

$N_{up}$ user terminals may be scheduled for simultaneous transmission on the uplink. Each of these user terminals performs spatial processing on its data symbol stream and transmits its set of transmit symbol streams on the uplink to the access point.

At access point 110, $N_{ap}$ antennas 224a through 224ap receive the uplink signals from all $N_{up}$ user terminals transmitting on the uplink. Each antenna 224 provides a received signal to a respective receiver unit (RCVR) 222. Each receiver unit 222 performs processing complementary to that performed by transmitter unit 254 and provides a received symbol stream. An RX spatial processor 240 performs receiver spatial processing on the $N_{ap}$ received symbol streams from $N_{ap}$ receiver units 222 and provides $N_{up}$ recovered uplink data symbol streams. The receiver spatial processing is performed in accordance with the channel correlation matrix inversion (CCMI), minimum mean square error (MMSE), soft interference cancellation (SIC), or some other technique. Each recovered uplink data symbol stream $\{s_{up,m}\}$ is an estimate of a data symbol stream $\{s_{up,m}\}$ transmitted by a respective user terminal. An RX data processor 242 processes (e.g., demodulates, deinterleaves, and decodes) each recovered uplink data symbol stream $\{s_{up,m}\}$ in accordance with the rate used for that stream to obtain decoded data. The decoded data for each user terminal may be provided to a data sink 244 for storage and/or a controller 230 for further processing.

On the downlink, at access point 110, a TX data processor 210 receives traffic data from a data source 208 for $N_{dn}$ user terminals scheduled for downlink transmission, control data from a controller 230, and possibly other data from a scheduler 234. The various types of data may be sent on different transport channels. TX data processor 210 processes (e.g., encodes, interleaves, and modulates) the traffic data for each user terminal based on the rate selected for that user terminal. TX data processor 210 provides $N_{dn}$ downlink data symbol streams for the $N_{dn}$ user terminals. A TX spatial processor 220 performs spatial processing on the $N_{dn}$ downlink data symbol streams, and provides $N_{ap}$

transmit symbol streams for the $N_{ap}$ antennas. Each transmitter unit 222 receives and processes a respective transmit symbol stream to generate a downlink signal. $N_{ap}$ transmitter units 222 providing $N_{ap}$ downlink signals for transmission from $N_{ap}$ antennas 224 to the user terminals.

At each user terminal 120, $N_{ut,m}$ antennas 252 receive the $N_{ap}$ downlink signals from access point 110. Each receiver unit 254 processes a received signal from an associated antenna 252 and provides a received symbol stream. An RX spatial processor 260 performs receiver spatial processing on $N_{ut,m}$ received symbol streams from $N_{ut,m}$ receiver units 254 and provides a recovered downlink data symbol stream $\{s_{dn,m}\}$ for the user terminal. The receiver spatial processing is performed in accordance with the CCMI, MMSE or some other technique. An RX data processor 270 processes (e.g., demodulates, deinterleaves and decodes) the recovered downlink data symbol stream to obtain decoded data for the user terminal.

At each user terminal 120, a channel estimator 278 estimates the downlink channel response and provides downlink channel estimates, which may include channel gain estimates, SNR estimates, and so on. Similarly, a channel estimator 228 estimates the uplink channel response and provides uplink channel estimates. Controller 280 for each user terminal typically derives the spatial filter matrix for the user terminal based on the downlink channel response matrix $H_{dn,m}$ for that user terminal. Controller 230 derives the spatial filter matrix for the access point based on the effective uplink channel response matrix $H_{up,eff}$. Controller 280 for each user terminal may send feedback information (e.g., the downlink and/or uplink steering vectors, SNR estimates, and so on) to the access point. Controllers 230 and 280 also control the operation of various processing units at access point 110 and user terminal 120, respectively.

For a single link involving one transmit node and one receive node, e.g., a downlink between an AP and a STA, the selection of an appropriate modulation and coding scheme (MCS) may be represented as a function of the signal to noise ratio (SNR) at the receiver node. An ideal rate adaptation (RA) scheme maps a particular SNR to the appropriate MCS. Thus, MCS may be expressed functionally as:

$$MCS = RA(SNR) \qquad\qquad (1)$$

The SNR is a function of the AP-to-STA link settings such as transmission power (TXPower), distance (Pathloss), and noise floor (Noise). The SNR may be expressed functionally as:

$$SNR = TXPower(AP) - Pathloss(AP,STA) - Noise(STA) \ [dB] \qquad (2)$$

An MCS should be selected that allows for the highest data throughput. Thus, the efficacy of any rate adaptation scheme is measured based on the data throughput achieved for given set of link settings.

In IEEE 802.11 networks, a transmitter (i.e., a transmitting node that is determining an MCS for a transmission) often has no direct knowledge of the SNR at the intended receiver. Conventional rate adaptation schemes as used, for example, in IEEE 802.11 WLANs, select an appropriate MCS by counting a number of successful or erroneous transmissions. Successive successful transmissions may indicate relatively good channel conditions. When such successive successful transmissions occur, the RA scheme is typically configured to select an MCS allowing for a higher data rate (i.e., a rate that is expected to allow yet another successful transmission) for the next transmission. By contrast, successive erroneous transmissions may indicate a bad channel, and the RA scheme is configured accordingly to select an MCS that allows for lower data rate (which is more likely to achieve successful transmission over a poor channel).

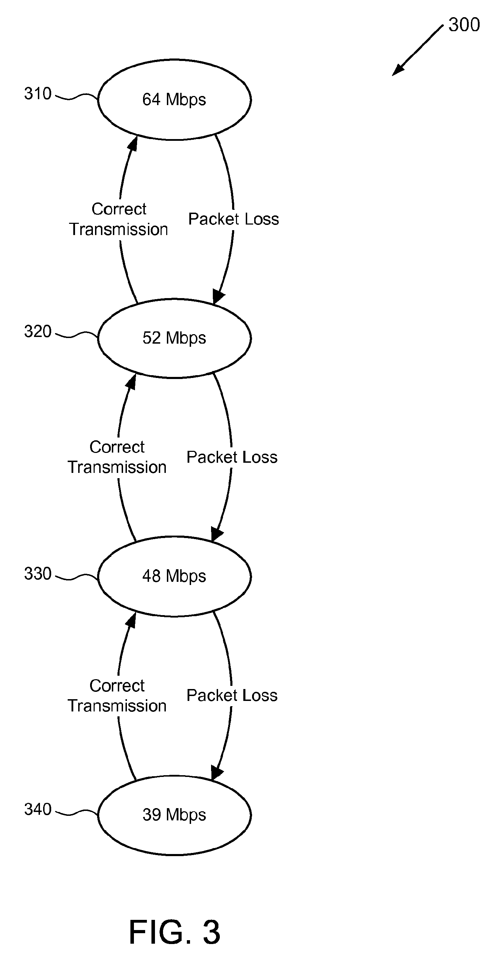

Such a RA scheme may be described as a state machine. FIG. 3 depicts an example of such a RA scheme 300. FIG. 3 depicts four different rates each corresponding to a different MCS. MCS 310 operates at a rate of 64 Mbps, MCS 320 operates at a rate of 52 Mbps, MCS 330 operates at a rate of 48 Mbps, and MCS 340 operates at a rate of 39 Mbps. The transitions from one state to another are defined according to successive correct transmissions (on the left) and measured packet losses (on the right). Thus, the decision to transition from an existing MCS to a new MCS is based on a number of successive correct transmissions and a number of measured packet losses. This RA evolution scheme may also be referred to herein as the "single user case."

In an embodiment, the present invention applies to a wireless local area network (WLAN) where multiple Stations (STA) have data to send to a single receiver, referred to herein as an access point (AP). According to an Uplink Spatial Division Multiple Access (UL-SDMA) technique, multiple STAs are allowed to send data at the same time towards the AP. According to a Downlink Spatial Division Multiple Access (DL-SDMA) technique, an AP is allowed to send data at the same time towards multiple STAs. Each independent data flow that can be part of an UL/DL-SDMA transmission is called Spatial Stream (SS). In one example, a data stream 140 may be transmitted via downlink from AP 110 to STA 120d at the same time that data stream 150 is transmitted via downlink from AP 110 to STA 120e. In another example, a data stream 160 may be transmitted via uplink from STA 120d to AP 110 at the same time that data stream 170 is transmitted via uplink from STA 120e to AP 110. In the context of SDMA, data streams 140, 150, 160, and 170 are spatial streams.

In SDMA transmissions, multiple data flows are usually served simultaneously. The SNR experienced by one particular data flow (e.g., spatial stream) depends on the characteristics of the joint transmission of all the flows (e.g., spatial streams) simultaneously served in the SDMA.

In a downlink transmission from an AP to multiple STAs (DL-SDMA), the selection of an appropriate MCS (e.g., MCS1) for a particular STA (e.g., STA1) may be represented as a function of the signal to noise ratio (e.g., SNR1) at the particular STA. A RA scheme (e.g., RA1) maps a particular SNR to the appropriate MCS. In this manner, MCS1 may be expressed functionally as:

$$MCS1 = RA1( SNR1 ) \qquad (3)$$

In addition to the particular AP-to-STA link settings such as transmission power (TXPower) by the AP, pathloss (PathLoss) introduced by the channel, and the noise floor (Noise), SNR1 is also a function of multiplexing losses and orthogonality losses in the context of SDMA. In one example, the multiplexing losses and orthogonality losses may be approximated as functions of the number of streams included in a particular SDMA transmission. In this manner, SNR1 may be expressed functionally as:

$$SNR1 = TXPower(AP) - MultiplexingLoss(num\_streams) -$$

$$OrthogonalityLoss(num\_streams) - PathLoss(AP,STA) - Noise(STA) \qquad (4)$$

In this example, MultiplexingLoss(num streams) accounts for the effect of the total power transmitted by the AP split across multiple simultaneous transmissions. OrthogonalityLoss(num streams) is an inherent loss in the transmission scheme. Thus, in the downlink, the SNR of a STA depends not only on the AP-to-STA link, but also on the SDMA allocation (i.e., as indicated, the number of streams).

Similarly, for UL-SDMA an approximation for the SNR is:

$$SNR1 = MAXTXPower(STA1) - PowerBackoff(STA1) -$$

$$OrthogonalityLoss(num\_streams) - PathLoss(STA1,AP) - Noise(AP) \qquad (5)$$

In this example, MAXTXPower(STA1) is the maximum transmission power of STA1, PowerBackoff(STA1) is a scaling factor applied to the maximum transmit power. Together, MAXTXPower and PowerBackoff determine the transmit power of STA1. OrthogonahtyLoss(num_streams) is an inherent loss due to the channel and receiver structure and depends on the total number of streams. PathLoss(STA1,AP) is the channel attenuation. Noise(AP) is the noise floor at the AP.

Thus, in the uplink, as in the downlink, the SNR of a STA depends not only on the AP-to-STA link, but also on the SDMA allocation.

Because the SDMA allocation varies each time there is an SDMA transmission (i.e., there can be a different total number of spatial streams, different power backoff, different power value, different number of STAs, etc.), the SNR can likewise vary. Thus, inefficient MCS selection may result when a single user RA scheme is applied to each link in a SDMA transmission.

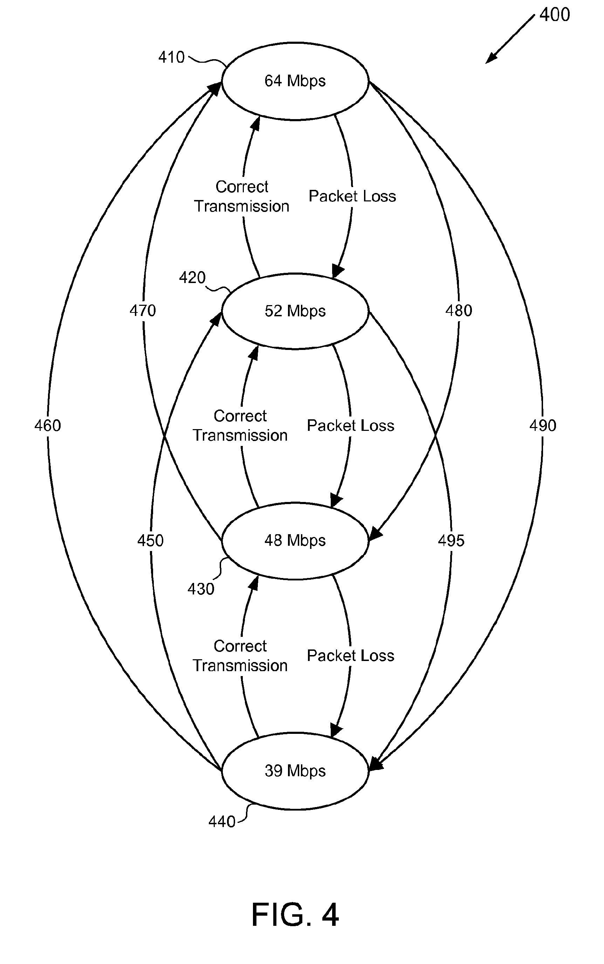

In one aspect, a scheme for RA is performed as illustrated by the state machine described by FIG. 4. In this particular example, the state machine of FIG. 4 includes the MCS states and transitions illustrated in FIG. 3, but also includes additional transitions based on changes of one or more loss parameters (or variables related thereto). In one example, loss parameters may be SDMA parameters used in the most recent transmission during which packet success or loss was measured. The enhanced scheme may be referred to herein as "enhanced RA." Although, illustrated in FIG. 4 by a state diagram, enhanced RA may be implemented in many different ways (e.g., state machine, functional expression, look-up table, etc.). By way of example, loss parameters may include, a total number of spatial streams (SS) allocated to a particular AT, a total number of spatial streams (SS) allocated by an access point (AP) for the simultaneous transmission of multiple data streams, a transmit power back-off allocated to each AT scheduled for the simultaneous transmission of the multiple data streams, a total number of ATs allocated for the current transmission, a transmit power value allocated to each AT scheduled for the simultaneous transmission of the multiple data streams, a transmit power back-off allocated to a particular AT, a transmit power value allocated to a particular AT, and a signal to noise ratio (SNR) offset value allocated to a particular AT.

Where the loss parameters remain substantially constant, enhanced RA may not be needed. In that case, the RA may evolve conventionally according to the state machine as described in FIG. 3 (i.e., the single user case). In particular, after each packet transmission at the STA, the modulation and coding scheme (MCS) to be used for the next packet is selected. In this case, as discussed herein, the current MCS (i.e., the MCS to be used for transmitting data during the current TXOP) is a function of a previous MCS (i.e., an MCS from a previous TXOP) and the number of successes or errors that have occurred for packet transmissions during recent TXOPs. Where the loss parameters have not remained constant, enhanced RA may be performed as described herein.

Although various embodiments and examples described herein refer to transmission rate (e.g., MCS) as a transmission parameter adapted for a current simultaneous transmission, many other transmission parameters may be adapted in a similar manner. For example, transmission power (e.g., a transmission power level, a transmission power backoff, or a transmission power offset) may be adapted for a current simultaneous transmission. In other examples, an amount of data or a type of data may be adapted for a current simultaneous transmission. In other examples, transmission duration may be adapted for a current simultaneous transmission. A transmission parameter may also be referred to as a transmission setting or a transmission configuration. In this manner a transmission parameter refers to a specific setting or configuration that dictates how data will be communicated. For example a transmission parameter dictates that data will be communicated at a specific rate, data will be communicated of a specific type, data will be communicated at a specific power level, a specific amount of data will be communicated, or data will be communicated over specific spatial streams.

Furthermore, various embodiments and examples described herein refer to a current transmission opportunity (TXOP) as a current simultaneous transmission. However, more generally, a current simultaneous transmission is a pending or upcoming transmission involving a plurality of data streams transmitted from or to a plurality of wireless nodes. For example, a current simultaneous transmission may be an upcoming simultaneous transmission that is currently being allocated. In some other examples, a current simultaneous transmission is an on-going transmission involving a plurality of data streams transmitted from or to a plurality of wireless nodes.

Several examples of loss parameters are described herein. However, more generally, a loss parameter is a parameter that is useable to determine an allocation for a wireless node. It follows that a current loss parameter is a loss parameter useable to determine an allocation for a wireless node for a current simultaneous transmission. For example, a current loss parameter may be a maximum number and ordering of spatial streams (e.g., five spatial streams ordered sequentially one through five) allocated to a group of STAs by an AP for the current simultaneous transmission. By way of specific example, AP 110 may determine that AT 120a may use any of spatial streams one and two and AT 120b may use any of spatial streams three, four, and five in the current simultaneous transmission of multiple data streams from ATs 120a and 120b. In this example, the current loss parameter communicated to AT 120a includes this assignment and AT 120a can allocate data for transmission over any of spatial streams one and two. Similarly, the current loss parameter communicated to AT 120b includes the assignment and AT 120b can allocate data for transmission over any of spatial streams three, four, and five. In some examples, a current loss parameter is a parameter determined by the AP that defines, but does not specifically dictate the current simultaneous transmission. For example, AT 120a may be assigned spatial streams one and two, but may determine that data will be communicated in the current simultaneous transmission over spatial stream one only. In this manner, an allocation for a wireless node may be determined based at least in part on the current loss parameter. In some other examples, a current loss parameter communicates information about the condition of the channel between the AP and a particular AP. A current loss parameter may also communicate historical transmission performance (e.g., packet loss ratio, packet loss, or received power level) on that channel. For example, AT 120a may receive an indication of significant packet loss in past transmissions and determine that the data transmission rate will be lowered in the current simultaneous transmission. In this manner, a rate allocation for a wireless node may be determined based at least in part on the current loss parameter.

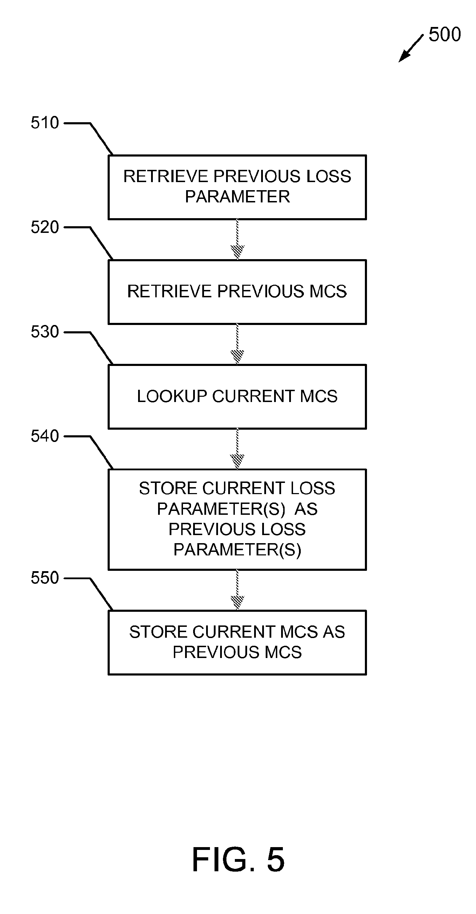

FIG. 5 illustrates a method 500 of adapting a transmission rate in a wireless communications system and is presently explained in accordance with FIG. 4. At block 510, at least one previous loss parameter from a previous transmission opportunity (TXOP) involving a particular link is retrieved. In one example, the total number of SS allocated by an AP for a previous SDMA communication TXOP involving the link is retrieved from a memory. At block 520, the MCS selected for the link for the previous TXOP is also retrieved. At block 530, the current MCS for the current TXOP is selected. In one example, the current MCS is determined (i.e., looked up) from a pre-computed look-up table based at least in part on any of a current loss parameter (e.g., the total number of SS allocated by the AP for the current SDMA communication TXOP), at least one previous loss parameter (e.g., the total number of SS allocated by the AP for the previous SDMA communication TXOP), and the MCS selected for the previous TXOP. Referring to FIG. 4, MCS 440 may be the previous MCS and based on the change in loss parameter from the previous TXOP to the current TXOP, it may be determined that a three-step increase in transmission rate is warranted. In this manner, a transition 460 from MCS 440 to MCS 410 is appropriate and MCS 410 is selected. It may also be determined that a two-step increase in transmission rate is warranted. In this manner, a transition 450 from MCS 440 to MCS 420 appropriate and MCS 420 is selected. In another example, MCS 430 may be the previous MCS and based on the change in loss parameter from the previous TXOP to the current TXOP, it may be determined that a two-step increase in transmission rate is warranted. In this manner, a transition 470 from MCS 430 to MCS 410 is appropriate and MCS 410 is selected. Similarly, transitions 480, 490, and 495 may also be appropriate to decrease the transmission rate depending on the change in loss parameter from the previous TXOP to the current TXOP and the previous MCS selected for the previous TXOP. Although explained in detail with reference to FIG. 4, many other transitions may be contemplated depending on any combination of current loss parameters, previous loss parameters, and previously selected MCS. Returning to FIG. 5, at block 540, the current loss parameters are stored as previous loss parameters such that they are available for a future SDMA communication TXOP. For example, the current loss parameters are stored for access in the next TXOP as the previous loss parameters as described above in relation to 510. Similarly, at block 550, the current MCS is stored as the previous MCS.

Enhanced RA may be applied to each of multiple node-to-node links, including communications conforming to SDMA protocols. The communications further include UL and DL communications. For DL communications, the enhanced RA is performed by the AP. For UL communications, the enhanced RA may be performed by either the AP or the STA. In one embodiment, method 500 is performed by a STA for an UL communication with an AP. In another embodiment, method 500 is performed by an AP for an UL communication with a STA. In yet another embodiment, method 500 is performed by an AP for a DL communication with a STA.

For a DL communication, the loss parameters are known at the AP. For an UL communication, the loss parameters are known at the AP and may be communicated by the AP to the STA(s) prior to the transmission(s) from the STA(s). In one example, the parameters could be signaled in a transmit start (TXS) message in SDMA. In another example, the parameters could be signaled in a clear to transmit (CTX) message in SDMA. TXS and CTX messages are mentioned by way of example, however any message from the AP to the STA prior to the STA initiating transmission of data is suitable to communicate the loss parameters.

In an embodiment, method 500 is applied when one or more of the loss parameters for a previous TXOP differ substantially from those of the current TXOP. In some examples, the memory from which the aforementioned parameters or variables are retrieved and stored is memory 232. In other examples, the memory is any of memory 282m, ... 282x and though it will be appreciated that other storage media as described herein may be used (e.g., computer-readable medium 1406). In an embodiment, the previous TXOP is the TXOP occurring immediately prior to the current TXOP, though it will be appreciated that other TXOPs may be specified instead, or as well. In an embodiment, the current MCS is read from a lookup table mapping a current MCS to a previous MCS, previous loss parameters, and current loss parameters. However, in other embodiments, the current MCS may be calculated functionally.

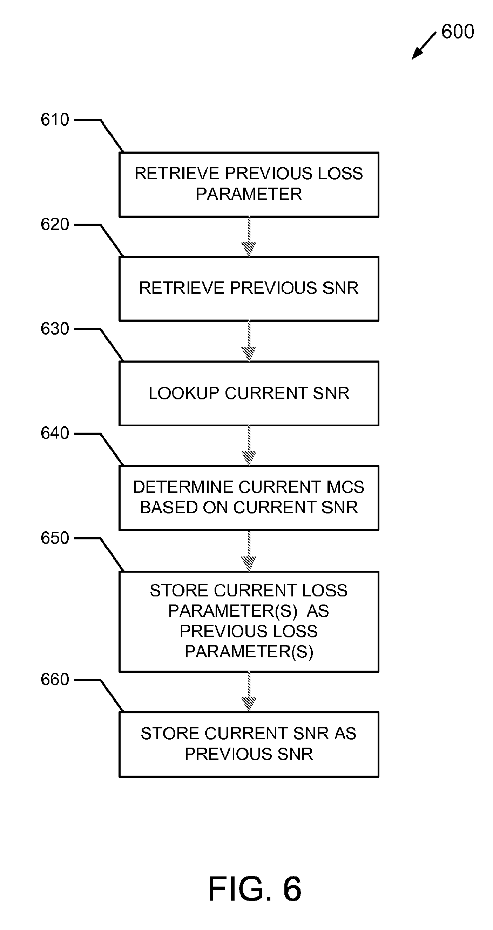

FIG. 6 illustrates a method 600 of adapting a transmission rate in a wireless communications system. Method 600 is similar to method 500 except that the loss parameters are mapped to a SNR from which an MCS may be further determined. At block 610) at least one previous loss parameter from a previous transmission opportunity (TXOP) involving a particular link is retrieved. In one example, the total number of SS allocated by an AP for a previous SDMA communication TXOP involving the link is retrieved from a memory. At block 620, the SNR determined for the previous TXOP is also retrieved. At block 630, the current SNR for the current TXOP is selected. In one example, the current SNR is determined (i.e., looked up) from a pre-computed look-up table based at least in part on any of a current loss parameter (e.g., the total number of SS allocated by the AP for the current SDMA communication TXOP), at least one previous loss parameter (e.g., the total number of SS allocated by the AP for the previous SDMA communication TXOP), and the SNR determined for the previous TXOP. At block 640, the current MCS is determined based on the current SNR. In one example, the current MCS is read from a rate table that maps SNR values to MCS selections. In another example, the current MCS may be computed from a function expressing transmission rates as a function of SNR values. At block 650, the current loss parameters are stored as previous loss parameters such that they are available for a future SDMA communication TXOP. For example, the current loss parameters are stored for access in the next TXOP as the previous loss parameters as described above in relation to 610. Similarly, at block 660, the current MCS is stored as the previous MCS.

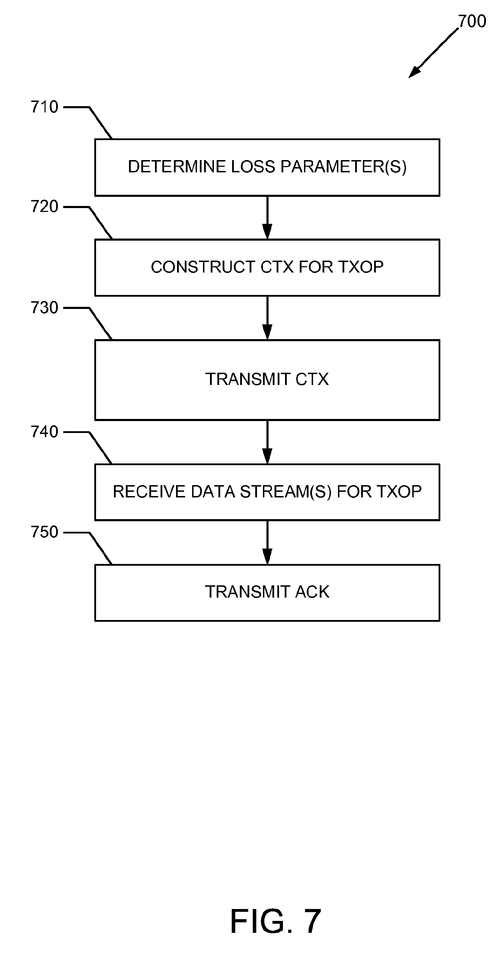

FIG. 7 illustrates a method 700 of determining a transmission rate in a wireless communications system. In an embodiment, the method 700 is performed, in this example, by an AP for a UL communication with a STA.

At 710, the AP determines loss parameters. The loss parameters may include, for example, the total number of spatial streams to be used (or are in use), and/or a power indication of each stream. Such a power indication may include a measure of the power, or a power scaling factor, for example, with respect to a previous transmission. It will be appreciated that other types of loss parameters are possible.

At 720, a clear to transmit message (CTX) for the next transmit opportunity (TXOP) is constructed. The CTX includes some or all of the loss parameters, or variables indicative of the loss parameters. At 730, the CTX is transmitted to the STA(s). At 740, data stream(s) from the STA(s) is(are) received for the TXOP. At 750, an acknowledgment (ACK) message is transmitted to the STA(s).

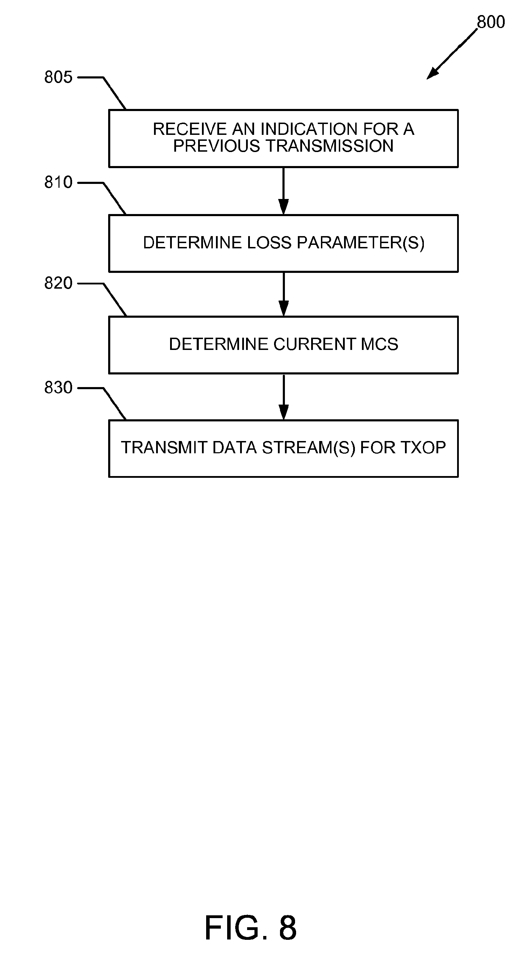

FIG. 8 illustrates a method 800 of determining a transmission rate in a wireless communications system. In an embodiment, the method 800 is performed, in this example, by an AP for a DL communication with a STA. At 805, the AP receives a message for a previous transmission from an AT. The message indicates attributes of a previous transmission or group of previous transmissions. For example, the message may indicate the packet loss ratio averaged over a number of previous transmissions. In another example, the message may indicate the packet loss of the previous transmission or group of previous transmissions. In another example, the message may indicate the power level received at the AT during the previous transmission. In another example, the message may indicate channel quality of the link between the AP and the STA.

At 810, the AP determines loss parameters. The loss parameters may include, for example, the total number of spatial streams to be used (or are in use), and/or a power indication of each stream. Such a power indication may include a measure of the power, or a power scaling factor, for example, with respect to a previous transmission. It will be appreciated that other types of loss parameters are possible. At 820, a current MCS is selected in accordance with any of methods 500 and 600. In some examples, the current MCS is selected based at least in part on the indications received from the AT at 805. At 830, at least one data stream is transmitted from the AP to the STA(s) in accordance with the selected MCS during the current TXOP.

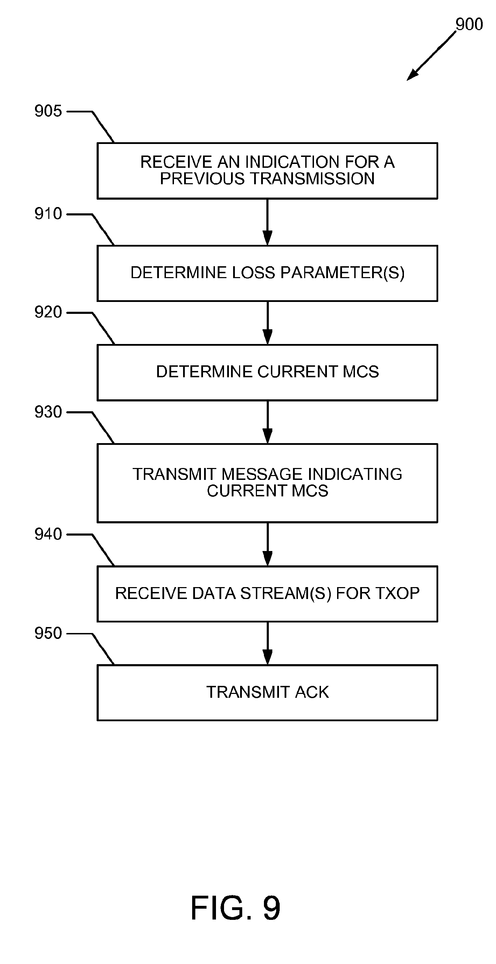

FIG. 9 illustrates a method 900 of determining a transmission rate in a wireless communications system. In an embodiment, the method 900 is performed, in this example, by an AP for a UL communication with a STA. Method 900 is similar to method 700 except that rather than communicating the loss parameters to a STA as in method 700, the current MCS is selected by the AP itself and communicated directly to the STA. At 905, the AP receives a message for a previous transmission from an AT as described with respect to block 805. At 910, the AP determines loss parameters. The loss parameters may include, for example, the total number of spatial streams to be used (or are in use), and/or a power indication of each stream. Such a power indication may include a measure of the power, or a power scaling factor, for example, with respect to a previous transmission. It will be appreciated that other types of loss parameters are possible.

At 920, a current MCS is selected in accordance with any of methods 500 and 600. At 930 a message (e.g., CTX or TXS) for the next transmit opportunity (TXOP) is transmitted that indicates the selected current MCS. At 940, data stream(s) from the STA(s) is(are) received for the TXOP. At 950, an acknowledgment (ACK) message is transmitted to the STA(s).

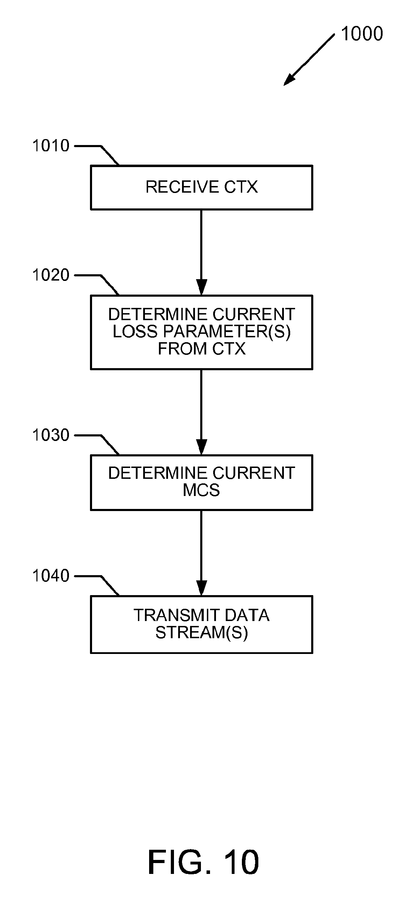

FIG. 10 illustrates another example method of determining a transmission rate in a wireless communications system. In an embodiment, method 1000 is performed, in this example, by a STA for an UL communication with an AP. At 1010, the STA receives a CTX. As described above, the CTX includes loss parameters for use in the enhanced RA scheme. At 1020, the loss parameters are determined at the STA from the CTX. At 1030, a current MCS is selected on the basis of one or more of the loss parameters. In an embodiment, the current MCS is selected according to the method 500. In another embodiment, the current MCS is selected according to the method 600. At 1040, one or more data streams are transmitted at a rate corresponding to the current MCS.

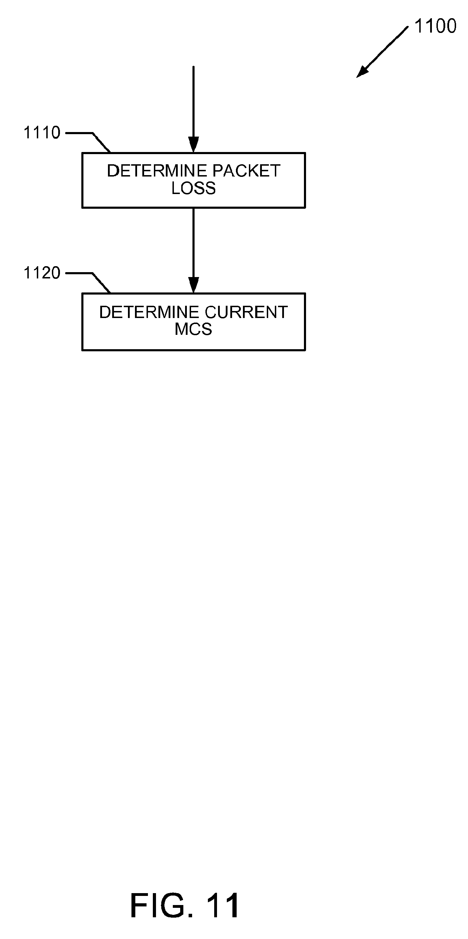

FIG. 11 illustrates another example method of determining a transmission rate in a wireless communications system. In various embodiments, method 1100 may be appended to any of methods 700, 800, 900, and 1000 and may be performed by either an AP or a STA accordingly. At block 1110 a packet loss, or alternatively, a successful packet transmission is determined. At block 1120, a current MCS is selected on the basis of either successive packet losses or successful packet transmissions as illustrated in FIG. 3. In this manner, single user rate adaptation may be performed in conjunction with any of the methods of enhanced rate adaptation disclosed herein.

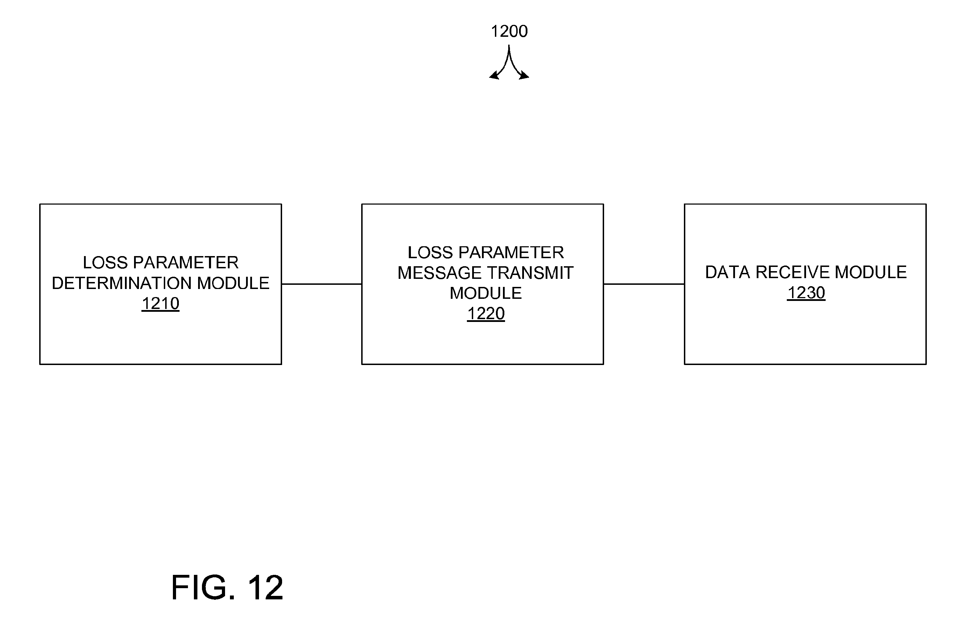

FIG. 12 is a diagram illustrating the functionality of an access point apparatus 1200 in accordance with one aspect of the disclosure. The apparatus 1200 includes a module 1210 for determining at least one current loss parameter for a current TXOP, wherein the at least one current loss parameter indicates an allocation for a simultaneous transmission for multiple data streams for the current TXOP; a module 1220 for transmitting a message that includes at least one current loss parameter for the current TXOP; and a module 1230 for receiving at least one data stream from the current TXOP.

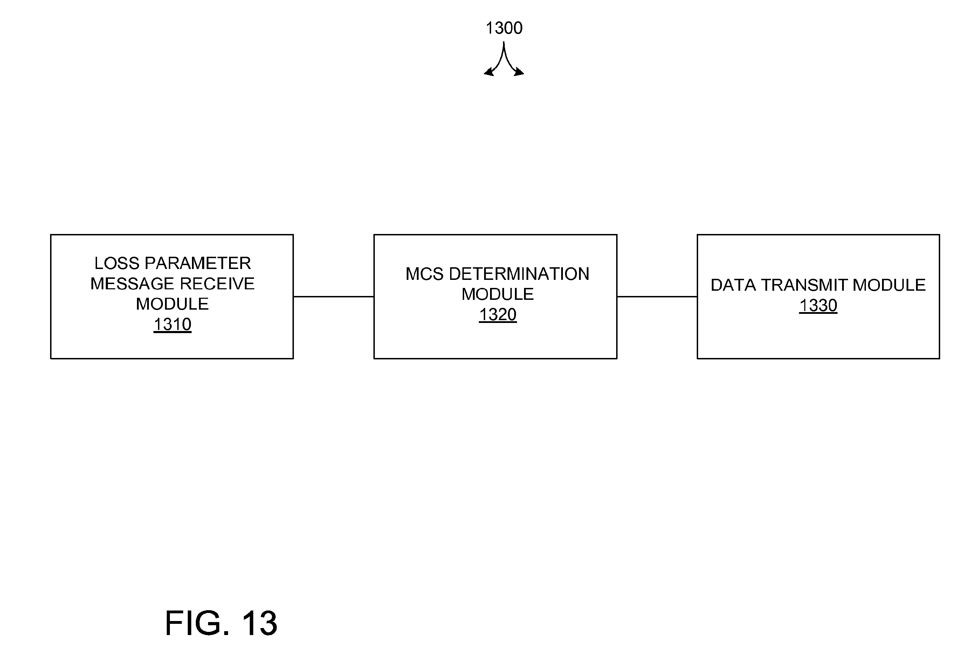

FIG. 13 is a diagram illustrating the functionality of an access terminal apparatus 1300 in accordance with one aspect of the disclosure. The apparatus 1300 includes a module 1310 for receiving a message for a current TXOP, wherein the message includes at least one current loss parameter that indicates an allocation for a simultaneous transmission of multiple data streams for the current TXOP; a module 1320 for determining a current MCS for the current TXOP based at least in part on the at least one current loss parameter; and a module 1330 for transmitting at least one data stream for the TXOP according to the current MCS.

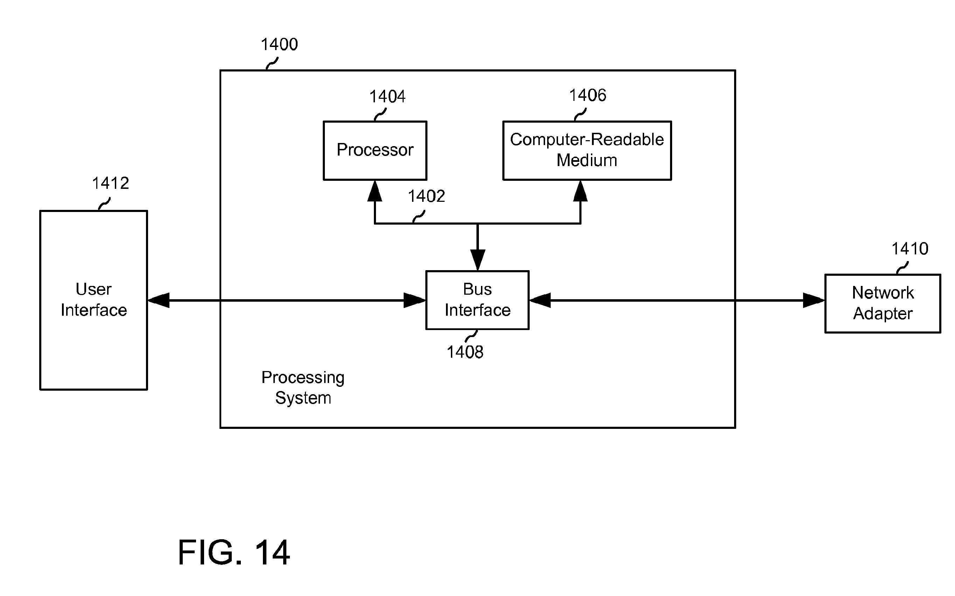

FIG. 14 illustrates an example of a hardware configuration for a processing system 1400 in a wireless node (e.g., AP 110 and AT 120). In this example, the processing system 1400 may be implemented with a bus architecture represented generally by bus 1402. The bus 1402 may include any number of interconnecting buses and bridges depending on the specific application of the processing system 1400 and the overall design constraints. The bus links together various circuits including a processor 1404, computer-readable media 1406, and a bus interface 1408. The bus interface 1408 may be used to connect a network adapter 1410, among other things, to the processing system 1400 via the bus 1402. The network interface 1410 may be used to implement the signal processing functions of the PHY layer. In the case of an access terminal 120 (see FIG. 1), a user interface 1412 (e.g., keypad, display, mouse, joystick, etc.)

may also be connected to the bus via the bus interface 1408. The bus 1402 may also link various other circuits such as timing sources, peripherals, voltage regulators, power management circuits, and the like, which are well known in the art, and therefore, will not be described any further.

The processor 1404 is responsible for managing the bus and general processing, including the execution of software stored on the computer-readable media 1408. The processor 1408 may be implemented with one or more general-purpose and/or special purpose processors. Examples include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure.

One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The software may reside on a computer-readable medium. A computer-readable medium may include, by way of example, a magnetic storage device (e.g., hard disk, floppy disk, magnetic strip), an optical disk (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, a carrier wave, a transmission line, or any other suitable medium for storing or transmitting software. The computer-readable medium may be resident in the processing system, external to the processing system, or distributed across multiple entities including the processing system. Computer-readable medium may be embodied in a computer-program product. By way of example, a computer-program product may include a computer-readable medium in packaging materials.

In the hardware implementation illustrated in FIG. 14, the computer-readable media 1406 is shown as part of the processing system 1400 separate from the processor 1404. However, as those skilled in the art will readily appreciate, the computer-readable media 1406, or any portion thereof, may be external to the processing system 1400. By way of example, the computer-readable media 1406 may include a transmission line, a carrier wave modulated by data, and/or a computer product separate from the wireless node, all which may be accessed by the processor 1404 through the bus interface 1408. Alternatively, or in addition to, the computer readable media 1404, or any portion thereof, may be integrated into the processor 1404, such as the case may be with cache and/or general register files.

The processing system, or any part of the processing system, may provide the means for performing the functions recited herein. By way of example, one or more processing systems executing code may provide the means for receiving a request to transmit data from a wireless node in a plurality of wireless nodes; and transmitting a multi-cast message to a set of wireless nodes in the plurality of wireless nodes to permit data transmission. Alternatively, the code on the computer readable medium may provide the means for performing the functions recited herein.

In one or more embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The multi-antenna transmission techniques described herein may be used in combination with various wireless technologies such as Code Division Multiple Access (CDMA), Orthogonal Frequency Division Multiplexing (OFDM), Time Division Multiple Access (TDMA), and so on. Multiple user terminals can concurrently transmit/receive data via different (1) orthogonal code channels for CDMA, (2) time slots for TDMA, or (3) subbands for OFDM. A CDMA system may implement IS-2000, IS-95, IS-856, Wideband-CDMA (W-CDMA), or some other standards. An OFDM system may implement IEEE 802.11 or some other standards. A TDMA system may implement GSM or some other standards. These various standards are known in the art.

The various operations of methods described above may be performed by various hardware and/or software component(s), logic, and/or module(s) corresponding to means-plus-function blocks illustrated in the figures.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

Information and signals may be represented using any of a variety of different technologies and techniques. For example, data, instructions, commands, information, signals and the like that may be referenced throughout the above description may be represented by voltages, currents, electromagnetic waves, magnetic fields or particles, optical fields or particles or any combination thereof.

The various illustrative logic blocks, modules and circuits described in connection with the present disclosure may be implemented or performed with a general purpose processor, a digital signal processor (DSP), an application specific integrated circuit (ASIC), a field programmable gate array signal (FPGA) or other programmable means device (PLD), discrete gate or transistor means, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray® disc where disks usually reproduce data magnetically, while discs reproduce data optically with lasers.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

**In the following, further examples are described to facilitate the understanding of the invention:**

1. A method **(1000)** of adapting a transmission parameter in a wireless communications system **(100)**, comprising:

receiving **(1010)** a message at a wireless node **(120d)** of a plurality of wireless nodes **(120d, 120e)** participating in a current simultaneous transmission of multiple data streams **(160, 170)**, the message including at least one current loss parameter useable to determine an allocation for the wireless node **(120d)**;
determining **(1030)** a current transmission parameter **(410)** for the wireless node **(120d)** for the current simultaneous transmission based at least in part on the at least one current loss parameter; and
transmitting **(1040)** from the wireless node **(120d)** at least one data stream **(160)** for the current simultaneous transmission according to the current transmission parameter **(410).**

2. The method **(1000)** of Example 1, wherein the determining **(1030)** of the current transmission parameter **(410)** includes:

retrieving **(510)** at least one previous loss parameter for a previous transmission;
retrieving **(520)** a previous transmission parameter **(430)** for the previous transmission; and
determining **(530)** the current transmission parameter **(410)** based on the previous transmission parameter **(430)**, the at least one previous loss parameter, and the at least one current loss parameter.

3. The method **(1000)** of Example 2, wherein the determining of the current transmission parameter **(410)** includes:

storing **(550)** the current transmission parameter as the previous transmission parameter; and
storing **(540)** the at least one current loss parameter as the previous loss parameter.

4. The method **(1000)** of Example 1, wherein the current transmission parameter is any of a modulation and coding scheme (MCS) and a transmission power level.

5. The method **(1000)** of Example 1, wherein the determining **(1030)** of the current transmission parameter includes:

retrieving **(610)** at least one previous loss parameter for a previous transmission;
retrieving **(620)** a previous signal to noise ratio (SNR) for the previous transmission;
determining **(630)** a current SNR based on the previous SNR, the at least one previous loss parameter, and the at least one current loss parameter; and
determining **(640)** the current transmission parameter **(410)** based on the current SNR.

6. The method **(1000)** of Example 1, wherein the message is any of a clear to transmit message (CTX) and a transmit start message (TXS).

7. The method **(1000)** of Example 1, wherein the at least one current loss parameter is any of
a total number of spatial streams (SS) allocated to the wireless node,
a total number of spatial streams (SS) allocated to the plurality of wireless nodes,
a transmit power back-off allocated to each wireless node of the plurality of wireless nodes,
a transmit power value allocated to each wireless node of the plurality of wireless nodes,
a transmit power back-off allocated to the wireless node,
a transmit power value allocated to the wireless node,
a total number of wireless nodes allocated for the current simultaneous transmission, and
a signal to noise ratio (SNR) offset value allocated to the wireless node.

8. The method **(1000)** of Example 1, further comprising:

determining **(1110)** a packet loss associated with a previous transmission; and
determining **(1120)** the current transmission parameter **(410)** for the current simultaneous transmission based at least in part on the packet loss for the previous transmission.

9. A method **(900)** of adapting a transmission parameter in a wireless communications system **(900)**, comprising:

determining **(910)** at least one current loss parameter for a current simultaneous transmission of multiple data streams **(160, 170)** from a plurality of wireless nodes **(120d, 120e)**;
transmitting **(930)** a message including the at least one current loss parameter to a wireless node **(120d)** of the plurality of wireless nodes **(120d, 120e)**, the at least one current loss parameter useable to determine an allocation for the wireless node **(120d)**; and

receiving **(940)** at least one data stream **(160)** from the wireless node **(120d)**, the at least one data stream **(160)** received according to a current transmission parameter **(410)** determined at the wireless node **(120d)** based at least in part from the current loss parameter.

10. The method **(900)** of Example 9, wherein the message is any of a clear to transmit message (CTX) and a transmit start message (TXS).

11. The method **(900)** of Example 9, wherein the at least one current loss parameter is any of
a total number of spatial streams (SS) allocated to the wireless node,
a total number of spatial streams (SS) allocated to the plurality of wireless nodes,
a transmit power back-off allocated to each wireless node of the plurality of wireless nodes,
a transmit power value allocated to each wireless node of the plurality of wireless nodes,
a transmit power back-off allocated to the wireless node,
a transmit power value allocated to the wireless node,
a total number of wireless nodes allocated for the current simultaneous transmission, and
a signal to noise ratio (SNR) offset value allocated to the wireless node.

12. A method **(800)** of adapting a transmission parameter in a wireless communications system **(100)**, comprising:

receiving **(805)** an indication of packet loss for at least one previous transmission from an access terminal **(120d)** of a plurality of access terminals **(120d, 120e)**;
determining **(810)** a current loss parameter, the current loss parameter useable to determine an allocation for the access terminal **(120d)** for a current simultaneous transmission of multiple data streams **(140, 150)** to the plurality of access terminals **(120d, 120e)**;
determining **(820)** a current transmission parameter **(410)** for the current simultaneous transmission based at least in part on the current loss parameter and the indication of packet loss; and
transmitting **(830)** at least one data stream **(140)** to the access terminal **(120d)** in accordance with the current transmission parameter **(410)**.

13. The method **(800)** of Example 12, wherein the determining of the current transmission parameter involves:

retrieving **(510)** at least one previous loss parameter for a previous transmission;
retrieving **(520)** a previous transmission parameter **(430)** for the previous transmission; and
determining **(530)** the current transmission parameter **(410)** based on the previous transmission parameter **(430)**, the at least one previous loss parameter, and the at least one current loss parameter.

14. The method **(800)** of Example 13, wherein the determining of the current transmission parameter includes:

storing **(550)** the current transmission parameter as the previous transmission parameter; and
storing **(540)** the at least one current loss parameter as the previous loss parameter.

15. The method **(800)** of Example 12, wherein the current transmission parameter is any of a modulation and coding scheme (MCS) and a transmission power level.

16. The method **(800)** of Example 12, wherein the determining of the current transmission parameter includes:

retrieving **(610)** at least one previous loss parameter for a previous transmission;
retrieving **(620)** a previous signal to noise ratio (SNR) for the previous transmission;
determining **(630)** a current SNR based on the previous SNR, the at least one previous loss parameter, and the at least one current loss parameter; and
determining **(640)** the current transmission parameter **(410)** based on the current SNR.

17. The method **(800)** of Example 12, wherein the at least one current loss parameter is any of
a total number of spatial streams (SS) allocated to the access terminal,
a total number of spatial streams (SS) allocated to the plurality of access terminals,
a transmit power back-off allocated to each access terminal of the plurality of access terminals,

a transmit power value allocated to each access terminal of the plurality of access terminals,
a transmit power back-off allocated to the access terminal,
a transmit power value allocated to the access terminal,
a total number of access terminals allocated for the current simultaneous transmission, and
a signal to noise ratio (SNR) offset value allocated to the access terminal.

18. An apparatus **(1300)**, comprising:

at least one antenna **(252da - 252du)** configured to
receive **(1310)** a message at a wireless node **(120d)** of a plurality of wireless nodes **(120d, 120e)** participating in a current simultaneous transmission of multiple data streams **(160, 170)**, the message including at least one current loss parameter useable to determine an allocation for the wireless node **(120d)**, and
transmit **(1330)** from the wireless node **(120d)** at least one data stream **(160)** for the current simultaneous transmission according to a current transmission parameter **(410)**; and
means for determining **(1320)** the current transmission parameter **(410)** for the wireless node **(120d)** for the current simultaneous transmission based at least in part on the at least one current loss parameter.

19. The apparatus **(1300)** of Example 18, wherein the determining of the current transmission parameter includes:

retrieving **(510)** at least one previous loss parameter for a previous transmission;
retrieving **(520)** a previous transmission parameter **(430)** for the previous transmission; and
determining **(530)** the current transmission parameter **(410)** based on the previous transmission parameter **(430)**, the at least one previous loss parameter, and the at least one current loss parameter.

20. The apparatus **(1300)** of Example 19, wherein the determining of the current transmission parameter includes:

storing **(550)** the current transmission parameter as the previous transmission parameter; and
storing **(540)** the at least one current loss parameter as the previous loss parameter.

21. The apparatus **(1300)** of Example 18, wherein the determining of the current transmission parameter includes:

retrieving **(610)** at least one previous loss parameter for a previous transmission;
retrieving **(620)** a previous signal to noise ratio (SNR) for the previous transmission;
determining **(630)** a current SNR based on the previous SNR, the at least one previous loss parameter, and the at least one current loss parameter; and
determining **(640)** the current transmission parameter **(410)** based on the current SNR.

22. The apparatus **(1300)** of Example 18, wherein the message is any of a clear to transmit message (CTX) and a transmit start message (TXS).

23. The apparatus **(1300)** of Example 18, wherein the at least one current loss parameter is any of
a total number of spatial streams (SS) allocated to the wireless node,
a total number of spatial streams (SS) allocated to the plurality of wireless nodes,
a transmit power back-off allocated to each wireless node of the plurality of wireless nodes,
a transmit power value allocated to each wireless node of the plurality of wireless nodes,
a transmit power back-off allocated to the wireless node,
a transmit power value allocated to the wireless node,
a total number of wireless nodes allocated for the current simultaneous transmission, and
a signal to noise ratio (SNR) offset value allocated to the wireless node.

24. An apparatus **(1200)** in a wireless communications system **(100)**, comprising:

means for **(1210)** determining at least one current loss parameter for a current simultaneous transmission of multiple data streams **(160, 170)** from a plurality of wireless nodes **(120d, 120e)**; and
at least one antenna **(224a-224ap)** configured to
transmit **(1220)** a message including the at least one current loss parameter to a wireless node **(120d)** of the plurality of wireless nodes **(120d, 120e)**, the at least one current loss parameter useable to determine an allocation for the wireless node **(120d)**, and

15

receive (1230) at least one data stream (160) from the wireless node (120d), the at least one data stream received according to a current transmission parameter (410) determined at the wireless node (120d) based at least in part from the current loss parameter.

25. The apparatus (1200) of Example 24, wherein the message is any of a clear to transmit message (CTX) and a transmit start message (TXS).

26. The apparatus (1200) of Example 24, wherein the at least one current loss parameter is any of
a total number of spatial streams (SS) allocated to the wireless node,
a total number of spatial streams (SS) allocated to the plurality of wireless nodes,
a transmit power back-off allocated to each wireless node of the plurality of wireless nodes,
a transmit power value allocated to each wireless node of the plurality of wireless nodes,
a transmit power back-off allocated to the wireless node,
a transmit power value allocated to the wireless node,
a total number of wireless nodes allocated for the current simultaneous transmission, and
a signal to noise ratio (SNR) offset value allocated to the wireless node.

27. A computer-program product for adapting a transmission parameter in a wireless communications system (100), comprising a computer-readable medium (1406) having instructions stored thereon, the instructions executable by one or more processors (1404), and comprising instructions to:

receive (1010) a message at a wireless node (120d) of a plurality of wireless nodes (120d, 120e) participating in a current simultaneous transmission of multiple data streams (160, 170), the message including at least one current loss parameter useable to determine an allocation for the wireless node (120d);
determine (1030) a current transmission parameter (410) for the wireless node (120d) for the current simultaneous transmission based at least in part on the at least one current loss parameter; and
transmit (1040) from the wireless node (120d) at least one data stream (160) for the current simultaneous transmission according to the current transmission parameter (410).

28. The computer-program product of Example 27, wherein the instructions to determine the current transmission parameter include instructions to:

retrieve (510) at least one previous loss parameter for a previous transmission;
retrieve (520) a previous transmission parameter (430) for the previous transmission; and
determine (530) the current transmission parameter (410) based on the previous transmission parameter (430), the at least one previous loss parameter, and the at least one current loss parameter.

29. The computer-program product of Example 28, wherein the instructions to determine the current transmission parameter include instructions to:

store (550) the current transmission parameter as the previous transmission parameter; and
store (540) the at least one current loss parameter as the previous loss parameter.

30. The computer-program product of Example 27, wherein the message is any of a clear to transmit message (CTX) and a transmit start message (TXS).

31. The computer-program product of Example 27, wherein the current transmission parameter is any of a modulation and coding scheme (MCS) and a transmission power level.

32. The computer-program product of Example 27, wherein the at least one current loss parameter is any of
a total number of spatial streams (SS) allocated to the wireless node,
a total number of spatial streams (SS) allocated to the plurality of wireless nodes,
a transmit power back-off allocated to each wireless node of the plurality of wireless nodes,
a transmit power value allocated to each wireless node of the plurality of wireless nodes,
a transmit power back-off allocated to the wireless node,
a transmit power value allocated to the wireless node,
a total number of wireless nodes allocated for the current simultaneous transmission, and
a signal to noise ratio (SNR) offset value allocated to the wireless node.

EP 2 863 568 A1

33. The computer-program product of Example 27, further comprising instructions to:

determine **(1110)** a packet loss for a previous transmission; and
determine **(1120)** the current transmission parameter **(430)** for the current simultaneous transmission based at least in part on the packet loss for the previous transmission.

34. A computer-program product for adapting a transmission parameter in a wireless communications system **(100)**, comprising a computer-readable medium **(1406)** having instructions stored thereon, the instructions executable by one or more processors **(1404)**, and comprising instructions to:

determine **(910)** at least one current loss parameter for a current simultaneous transmission of multiple data streams **(160, 170)** from a plurality of wireless nodes **(120d, 120e)**;
transmit **(930)** a message including the at least one current loss parameter to a wireless node **(120d)** of the plurality of wireless nodes **(120d, 120e)**, the at least one current loss parameter useable to determine an allocation for the wireless node **(120d)**; and
receive **(940)** at least one data stream **(160)** from the wireless node **(120d)**, the at least one data stream **(160)** received according to a current transmission parameter **(410)** determined at the wireless node **(120d)** based at least in part from the current loss parameter.

35. The computer-program product of Example 34, wherein the message is any of a clear to transmit message (CTX) and a transmit start message (TXS).

36. The computer-program product of Example 34, wherein the at least one current loss parameter is any of
a total number of spatial streams (SS) allocated to the wireless node,
a total number of spatial streams (SS) allocated to the plurality of wireless nodes,
a transmit power back-off allocated to each wireless node of the plurality of wireless nodes,
a transmit power value allocated to each wireless node of the plurality of wireless nodes,
a transmit power back-off allocated to the wireless node,
a transmit power value allocated to the wireless node,
a total number of wireless nodes allocated for the current simultaneous transmission, and
a signal to noise ratio (SNR) offset value allocated to the wireless node.

**Claims**

1.  A method (900) of adapting a transmission parameter in a wireless communications system (900), comprising:

    determining (910) at least one current loss parameter for a current simultaneous transmission of multiple data streams (160, 70) from a plurality of wireless nodes (120d, 120e);
    transmitting (930) a message including the at least one current loss parameter to a wireless node (120d) of the plurality of wireless nodes (120d, 120e), the at least one current loss parameter useable to determine an allocation for the wireless node (120d); and
    receiving (940) at least one data stream (160) from the wireless node (120d), the at least one data stream (160) received according to a current transmission parameter (410) determined at the wireless node (120d) based on a previous transmission parameter, at least one previous loss parameter, and the at least one current loss parameter.

2.  The method (900) of Claim 1, wherein the message is any of a clear to transmit message, CTX, and a transmit start message, TXS.

3.  The method (900) of Claim 1, wherein the at least one current loss parameter is any of
    a total number of spatial streams, SS, allocated to the wireless node,
    a total number of spatial streams, SS, allocated to the plurality of wireless nodes,
    a transmit power back-off allocated to each wireless node of the plurality of wireless nodes,
    a transmit power value allocated to each wireless node of the plurality of wireless nodes,
    a transmit power back-off allocated to the wireless node,
    a transmit power value allocated to the wireless node,
    a total number of wireless nodes allocated for the current simultaneous transmission, and

a signal to noise ratio, SNR, offset value allocated to the wireless node.

4.  The method of Claim 1, wherein the current transmission parameter is any of a modulation and coding scheme, MCS, and
    a transmission power level.

5.  An apparatus (1200) in a wireless communications system (100), comprising:

    means for (1210) determining at least one current loss parameter for a current simultaneous transmission of multiple data streams (160, 70) from a plurality of wireless nodes (120d, 120e); and
    at least one antenna (224a-224ap) configured to transmit (1220) a message including the at least one current loss parameter to a wireless node (120d) of the plurality of wireless nodes (120d, 120e), the at least one current loss parameter useable to determine an allocation for the wireless node (120d), and
    receive (1230) at least one data stream (160) from the wireless node (120d), the at least one data stream received according to a current transmission parameter (410) determined at the wireless node (120d) based on a previous transmission parameter, at least one previous loss parameter, and the at least one current loss parameter.

6.  The apparatus (1200) of Claim 5, wherein the message is any of a clear to transmit message, CTX, and a transmit start message, TXS.

7.  The apparatus (1200) of Claim 5, wherein the at least one current loss parameter is any of
    a total number of spatial streams, SS, allocated to the wireless node,
    a total number of spatial streams, SS, allocated to the plurality of wireless nodes,
    a transmit power back-off allocated to each wireless node of the plurality of wireless nodes,
    a transmit power value allocated to each wireless node of the plurality of wireless nodes,
    a transmit power back-off allocated to the wireless node,
    a transmit power value allocated to the wireless node,
    a total number of wireless nodes allocated for the current simultaneous transmission, and
    a signal to noise ratio, SNR, offset value allocated to the wireless node.

8.  The apparatus (1200) of Claim 5, wherein the current transmission parameter is any of a modulation and coding scheme, MCS, and a transmission power level.

9.  A computer program comprising executable instructions for causing at least one computer to perform a method according to one of the claims 1 to 4 when executed.

FIG. 1

EP 2 863 568 A1

FIG. 2

EP 2 863 568 A1

300

310 —⁀ ( 64 Mbps )

Correct
Transmission          Packet Loss

320 —⁀ ( 52 Mbps )

Correct
Transmission          Packet Loss

330 —⁀ ( 48 Mbps )

Correct
Transmission          Packet Loss

340 —⁀ ( 39 Mbps )

# FIG. 3

FIG. 4

500

510 — RETRIEVE PREVIOUS LOSS
PARAMETER

520 — RETRIEVE PREVIOUS MCS

530 — LOOKUP CURRENT MCS

540 — STORE CURRENT LOSS
PARAMETER(S) AS
PREVIOUS LOSS
PARAMETER(S)

550 — STORE CURRENT MCS AS
PREVIOUS MCS

# FIG. 5

600

610 — RETRIEVE PREVIOUS LOSS PARAMETER

620 — RETRIEVE PREVIOUS SNR

630 — LOOKUP CURRENT SNR

640 — DETERMINE CURRENT MCS BASED ON CURRENT SNR

650 — STORE CURRENT LOSS PARAMETER(S) AS PREVIOUS LOSS PARAMETER(S)

660 — STORE CURRENT SNR AS PREVIOUS SNR

# FIG. 6

700

710 — DETERMINE LOSS PARAMETER(S)

720 — CONSTRUCT CTX FOR TXOP

730 — TRANSMIT CTX

740 — RECEIVE DATA STREAM(S) FOR TXOP

750 — TRANSMIT ACK

FIG. 7

800

805 — RECEIVE AN INDICATION FOR A PREVIOUS TRANSMISSION

810 — DETERMINE LOSS PARAMETER(S)

820 — DETERMINE CURRENT MCS

830 — TRANSMIT DATA STREAM(S) FOR TXOP

FIG. 8

900

905 ── RECEIVE AN INDICATION FOR A
PREVIOUS TRANSMISSION

910 ── DETERMINE LOSS PARAMETER(S)

920 ── DETERMINE CURRENT MCS

930 ── TRANSMIT MESSAGE INDICATING
CURRENT MCS

940 ── RECEIVE DATA STREAM(S) FOR TXOP

950 ── TRANSMIT ACK

FIG. 9

1000

1010 —— RECEIVE CTX

1020 —— DETERMINE CURRENT
LOSS PARAMETER(S)
FROM CTX

1030 —— DETERMINE CURRENT
MCS

1040 —— TRANSMIT DATA
STREAM(S)

# FIG. 10

1100

1110 —— DETERMINE PACKET
LOSS

1120 —— DETERMINE CURRENT
MCS

# FIG. 11

LOSS PARAMETER
DETERMINATION MODULE
1210

LOSS PARAMETER
MESSAGE TRANSMIT
MODULE
1220

DATA RECEIVE MODULE
1230

FIG. 12

EP 2 863 568 A1

1300

| LOSS PARAMETER MESSAGE RECEIVE MODULE 1310 | MCS DETERMINATION MODULE 1320 | DATA TRANSMIT MODULE 1330 |

FIG. 13

FIG. 14

EP 2 863 568 A1

Europäisches
Patentamt

European
Patent Office

Office européen
des brevets

# EUROPEAN SEARCH REPORT

Application Number

EP 14 19 6270

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/022177 A1 (AWAD YASSIN ADEN [GB] ET AL) 5 February 2004 (2004-02-05) | 5-8 | INV. H04L1/00 H04B7/06 |
| Y | * paragraphs [0004], [0090], [0091], [0096], [0102], [0104], [0108] * <br> * figure 16 * | 1-4,9 | |
| X | US 2009/046800 A1 (XU HAO [US] ET AL) 19 February 2009 (2009-02-19) | 5-8 | |
| A | * figure 3 * | 1-4,9 | |
| Y | WO 2009/035382 A1 (ERICSSON TELEFON AB L M [SE]; TIDESTAV CLAES [SE]) 19 March 2009 (2009-03-19) <br> * abstract * <br> * claims 1,16 * | 1-4,9 | |

TECHNICAL FIELDS
SEARCHED      (IPC)

H04L

The present search report has been drawn up for all claims

| Place of search | Date of completion of the search | Examiner |
|---|---|---|
| Munich | 16 March 2015 | Murcia Martinez, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 19 6270

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2015

| Patent document cited in search report | | | Publication date | | Patent family member(s) | | Publication date |
|---|---|---|---|---|---|---|---|
| US 2004022177 | A1 | | 05-02-2004 | DE | 60308457 | T2 | 28-12-2006 |
| | | | | EP | 1387517 | A1 | 04-02-2004 |
| | | | | EP | 1729434 | A2 | 06-12-2006 |
| | | | | EP | 2007054 | A1 | 24-12-2008 |
| | | | | GB | 2391431 | A | 04-02-2004 |
| | | | | JP | 4287216 | B2 | 01-07-2009 |
| | | | | JP | 2004064797 | A | 26-02-2004 |
| | | | | US | 2004022177 | A1 | 05-02-2004 |
| | | | | US | 2007189208 | A1 | 16-08-2007 |
| | | | | US | 2007189209 | A1 | 16-08-2007 |
| | | | | US | 2007189210 | A1 | 16-08-2007 |
| | | | | US | 2007189211 | A1 | 16-08-2007 |
| | | | | US | 2007189212 | A1 | 16-08-2007 |
| US 2009046800 | A1 | | 19-02-2009 | AU | 2008286923 | A1 | 19-02-2009 |
| | | | | BR | PI0814945 | A2 | 27-01-2015 |
| | | | | CA | 2694168 | A1 | 19-02-2009 |
| | | | | CN | 101843062 | A | 22-09-2010 |
| | | | | EP | 2183892 | A2 | 12-05-2010 |
| | | | | JP | 5431325 | B2 | 05-03-2014 |
| | | | | JP | 2011517373 | A | 02-06-2011 |
| | | | | JP | 2014014101 | A | 23-01-2014 |
| | | | | KR | 20100044258 | A | 29-04-2010 |
| | | | | RU | 2010109400 | A | 20-09-2011 |
| | | | | TW | 200924451 | A | 01-06-2009 |
| | | | | US | 2009046800 | A1 | 19-02-2009 |
| | | | | WO | 2009023681 | A2 | 19-02-2009 |
| WO 2009035382 | A1 | | 19-03-2009 | EP | 2198549 | A1 | 23-06-2010 |
| | | | | JP | 5336493 | B2 | 06-11-2013 |
| | | | | JP | 2010539748 | A | 16-12-2010 |
| | | | | US | 2010202284 | A1 | 12-08-2010 |
| | | | | WO | 2009035382 | A1 | 19-03-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61312119 B